# EUROPÄISCHE PATENTSCHRIFT

(11) **EP 4 086 205 B1**
(45) Veröffentlichungstag und Bekanntmachung des Hinweises auf die Patenterteilung: **28.01.2026**
(21) Anmeldenummer: 22169223.9
(22) Anmeldetag: 21.04.2022
(51) Int. Cl.: B65G 29/00, B65G 47/84, F16B 21/00

(54) **FORMATTEIL, BEFESTIGUNG FÜR EIN FORMATTEIL UND MONTAGEVERFAHREN FÜR EIN FORMATTEIL**
FORMAT PART, ATTACHMENT FOR A FORMAT PART AND METHOD OF ASSEMBLING A FORMAT PART
PIÈCE MOULÉE, FIXATION POUR UNE PIÈCE MOULÉE ET PROCÉDÉ DE MONTAGE POUR UNE PIÈCE MOULÉE

(30) Priorität: 05.05.2021 DE 102021111675
(43) Veröffentlichungstag der Anmeldung: 09.11.2022
(73) Patentinhaber: KRONES AG, 93073 Neutraubling (DE)
(72) Erfinder: ECHTENACHER, Albert, 93073 Neutraubling (DE); SCHOENFELDER, Markus, 93073 Neutraubling (DE)
(74) Vertreter: v. Bezold & Partner Patentanwälte - PartG mbB

(56) Entgegenhaltungen:
- DE-A1- 102009 018 731
- DE-A1- 102013 105 912
- DE-A1- 102013 105 913

## Beschreibung

### Technisches Gebiet

Die Erfindung betrifft eine Befestigungsvorrichtung für ein Formatteil, ein Formatteil sowie ein Verfahren zum Montieren eines Formatteils für eine Behälterbehandlungsanlage.

### Technischer Hintergrund

Behälter können in Behälterbehandlungsanlagen durch die einzelnen Anlagenteile transportiert und bspw. gefüllt und verschlossen werden. Beim Transport können die Behälter von Formatteilen (auch Garnitur, Bahnführung oder Bahnelement genannt) geführt werden. Die Formatteile können an die jeweiligen Eigenschaften der zu führenden Behälter, wie beispielsweise die Behälterform, das Behältergewicht und/oder die Behältergröße, angepasst sein. Damit die Behälterbehandlungsanlage für unterschiedliche Behälter einsetzbar ist, können die Formatteile auf die unterschiedlichen Behältergrößen, d. h. insbesondere die Behälterhöhe und den Behälterdurchmesser, ausgerichtet sein. So ist für eine sichere Führung beispielsweise der ideale Kontaktpunkt des Formatteils am Behälter mit geringer Höhe im Verhältnis zu seiner Position in der Behälterbehandlungsanlage deutlich niedriger als bei einem besonders hohen Behälter. Aus diesem Grund können die Formatteile auswechselbar sein, sodass bei einer Behälterformatumstellung, z. B. von einer ersten Behältergröße auf eine zweite Behältergröße, die Formatteile ausgewechselt werden. Neben der kostenintensiven Bereithaltung von unterschiedlichen Formatteilen für jede Behältergröße bzw. Gruppe von Behältergrößen oder Behälterdesigns, ist insbesondere der Austausch der Formatteile aufwendig und kostenintensiv.

Die EP 2 897 872 B1 offenbart eine Technik zum werkzeuglosen Austausch von Formatteilen. Das Formatteil weist zumindest ein Verbindungselement auf, über das das Formatteil mit einem Aufnahmeelement lösbar verbindbar ist. Das Verbindungselement ist als Sperrbolzen mit Sperrkugeln ausgeführt. An dem Aufnahmeelement ist ein Rastelement vorgesehen. Das Verbindungselement durchgreift das Formatteil. Das Verbindungselement ist mit seiner Verbindungsseite mit dem Rastelement lösbar verbindbar. Das Verbindungselement weist entgegengesetzt zu der Verbindungsseite eine Betätigungsseite mit einem als Druckknopf ausgeführten Betätigungselement auf. Wird der Druckknopf betätigt, werden die Sperrkugeln entriegelt. Das Formatteil ist parallel zur Hochachse der Behälterbehandlungsanlage montierbar und demontierbar.

Die DE 10 2009 018731 A1, welche die Merkmale des Oberbegriffs des Anspruchs 1 offenbart, betrifft ein Führungselement, das Führungsteilelemente aufweist, welche über zumindest ein Verbindungselement miteinander verbindbar sind. Um ein sehr einfach und zeitsparend auszutauschendes Führungselement zur Verfügung zu stellen, wird vorgeschlagen, dass zumindest ein Verbindungselement ein erstes Verbindungsteilelement und ein zweites Verbindungsteilelement aufweist, wobei eines der beiden Verbindungsteilelemente eine verriegelbare Aufnahme aufweist, in welche das andere Verbindungsteilelement mit seiner an die Aufnahme korrespondierend ausgeführten Steckseite einsteckbar ist, so dass das eine Verbindungsteilelement an dem anderen Verbindungsteilelement kraftschlüssig lagesicher gehalten ist, wenn die verriegelbare Aufnahme verriegelt ist.

Die DE 10 2013 105913 A1 betrifft eine Behälterbehandlungsanlage mit einem auswechselbaren Formatteil zum Führen von Behältern und einen Riegelverschluss zum lösbaren Verbinden des Formatteils mit einer Verriegelungsvorrichtung. Um eine Behälterbehandlungsanlage mit einem besonders einfach auswechselbaren Formatteil bereitzustellen, ist vorgesehen, dass der Riegelverschluss einen zwischen einer ersten Position und einer zweiten Position drehbaren Riegel aufweist, wobei der Riegel das Formatteil in der ersten Position freigibt und in der zweiten Position verriegelt und der Riegelverschluss dazu ausgebildet ist, das Formatteil und die Verriegelungsvorrichtung in Längsachsenrichtung des Riegelverschlusses zu fixieren und zu verspannen.

Die DE 10 2013 105912 A1 betrifft ein Bahnelement für eine Behältertransportanlage zum Führen von transportierten Behältern, mit einem Aufnahme- und Trägerelement, einem auswechselbaren Leit- und Führungselement als behälterabhängiges Formatteil und einer oder mehrerer Rastkopplungen zum Befestigen des Leit- und Führungselementes an dem Aufnahme- und Trägerelement. Um eine Behälterbehandlungsanlage mit einem besonders einfach auswechselbaren Leit- und Führungselement bereitzustellen, weist die Rastkopplung ein Rastelement und eine korrespondierende Rastöffnung auf, durch die das Rastelement durchführbar ist und das Rastelement gegen eine Federkraft auslenkbar ist und das Rastelement bewegbar ist zwischen einer Ausgangslage, in der es in die Rastöffnung einführbar ist und einer Verriegelungsposition, in der es an der Rastöffnung verriegelt ist.

Die DE 20 2014 104 778 U1 offenbart eine Fixierung eines Formatteils an einer Grundplatte einer Behältertransportanlage. Die Behältertransportanlage weist ein auswechselbares Bahnelement zum Führen von Behältern und ein an einem Grundkörper angeordnetes Trägerelement zur Aufnahme des Bahnelements auf. Eine Reibvorrichtung ist an dem Grundkörper drehbar gelagert. Die Reibvorrichtung verspannt in einer ersten Stellung das Bahnelement mit dem Trägerelement. In einer zweiten Stellung ist die Reibvorrichtung in Richtung ihrer Drehachse von dem Aufnahmeelement entnehmbar.

Weitere Techniken zum Fixieren von Formatteilen zur Behälterführung sind bspw. aus der EP 3 092 189 A1, der EP 3 003 922 A1 und der EP 3 044 100 A1 bekannt.

Der Erfindung liegt die Aufgabe zu Grunde, eine verbesserte Technik zum Befestigen eines Formatteils zum Führen von Behältern in einer Behälterbehandlungsanlage zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Die Erfindung betrifft eine Befestigungsvorrichtung für ein Formatteil zum Führen von Behältern in einer Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Befestigungsvorrichtung weist einen Drehriegel zum Einspannen des Formatteils auf, der zwischen einer ersten Riegelstellung, vorzugsweise Entriegelungsstellung, und einer zweiten Riegelstellung, vorzugsweise Verriegelungsstellung, um eine Drehachse drehbar ist. Die Befestigungsvorrichtung weist ein Sperrelement auf, das koaxial, zu der Drehachse zwischen einer Sperrstellung und einer Freigabestellung verschiebbar ist. Das Sperrelement blockiert in der Sperrstellung den Drehriegel in der ersten Riegelstellung (z. B. verdrehsicher und/oder unbewegbar), vorzugsweise mittels Eingreifen in den Drehriegel (z. B in einer Unterseite des Drehriegels). Das Sperrelement gibt in der Freigabestellung eine Drehung des Drehriegels frei.

Vorteilhaft ermöglicht die Befestigungsvorrichtung eine schnelle und werkzeuglose Montage und Demontage des Formatteils. Bei Freigabe des Drehriegels kann dieser sich bspw. selbsttätig in eine Verriegelungsstellung drehen, um das Formatteil zu befestigen. Bevorzugt kann das Formatteil mit einer Hand montiert und demontiert werden. Vorzugsweise kann die Befestigungsvorrichtung aufgrund weniger Teile und eines vergleichsweise einfachen Aufbaus kostengünstig hergestellt und platzsparend konstruiert werden sowie eine vergleichsweise lange Standzeit aufweisen.

In einem Ausführungsbeispiel ist der Drehriegel elastisch zum Drehen zu der zweiten Riegelstellung vorgespannt, vorzugsweise mittels einer bevorzugt koaxial zur Drehachse angeordneten Torsionsfeder.

In einem weiteren Ausführungsbeispiel ist das Sperrelement elastisch zum Verschieben zu der Sperrstellung vorgespannt, vorzugsweise mittels einer bevorzugt koaxial zur Drehachse angeordneten Schraubenfeder.

In einem weiteren Ausführungsbeispiel weist die Befestigungsvorrichtung ferner eine Führungshülse auf, auf der das Sperrelement zwischen der Sperrstellung und der Freigabestellung verschiebbar ist. Vorzugsweise kann die Führungshülse verdrehsicher angeordnet sein, und/oder eine den Drehriegel zu der zweiten Riegelstellung vorspannende Torsionsfeder kann an der Führungshülse gehalten sein, bevorzugt mit einem Ende der Torsionsfeder in einem Loch einer ringförmigen Außenwand der Führungshülse. Vorzugsweise kann somit eine bauraumgünstige Anordnung geschaffen werden, die auch unter Hygienegesichtspunkten vorteilhaft sein kann.

In einem weiteren Ausführungsbeispiel weist der Drehriegel unterseitig einen Kragenabschnitt auf. Vorzugsweise verläuft der Kragenabschnitt koaxial zur Drehachse und führt den Drehriegel drehbar und/oder zentriert den Drehriegel. Bevorzugt kann das Sperrelement in der Sperrstellung in eine Ausnehmung in dem Kragenabschnitt eingreifen. Bevorzugt können somit mehrere Funktionen im Kragenabschnitt integriert sein, nämlich Drehführung des Drehriegels und Aufnahme des Sperrelements in der Sperrstellung. Vorteilhaft kann somit eine besonders bauraumsparende Anordnung ermöglicht werden.

In einer Ausführungsform weist die Befestigungsvorrichtung ferner ein Führungselement auf. Der Drehriegel ist an dem Führungselement zum Drehen geführt und/oder zentriert, vorzugsweise an einem oberen Abschnitt des Führungselements. Alternativ oder zusätzlich ist das Sperrelement an dem Führungselement zum Verschieben geführt, vorzugsweise in mindestens einer Ausnehmung einer (z. B. ringförmigen) Außenwand des Führungselements. Optional kann das Sperrelement von dem Führungselement verdrehsicher bezüglich der Drehachse gehalten sein. Alternativ oder zusätzlich kann das Führungselement eine Kontaktfläche aufweisen, wobei das Formatteil zwischen der Kontaktfläche und dem Drehriegel (z. B. einer Unterseite des Drehriegels) einspannbar ist. Bevorzugt können somit mehrere Funktionen im Führungselement integriert sein, nämlich bspw.

Drehführung des Drehriegels, Aufnahme und Führung des Sperrelements und Anlage für das Formatteil.

In einer weiteren Ausführungsform ist das Sperrelement als ein Stab, vorzugsweise Flachstab, ausgeführt. Alternativ oder zusätzlich weist das Sperrelement eine (z. B. mittige) Durchgangsöffnung, die koaxial zur Drehachse angeordnet ist, auf. Alternativ oder zusätzlich ist das Sperrelement quer zu der Drehachse ausgerichtet.

Vorzugsweise kann die Befestigungsvorrichtung ferner eine Trägereinrichtung und ein Befestigungselement, vorzugsweise einen Bolzen, aufweisen. Das Befestigungselement ist an der Trägereinrichtung befestigt, koaxial zur Drehachse angeordnet und/oder sichert den Drehriegel bezüglich der Drehachse axial.

Weiters betrifft die Erfindung ein Formatteil zum Führen von Behältern in einer Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Das Formatteil weist einen Hauptkörper zum Führen der Behälter und einen Drehbetätiger, vorzugsweise Drehknopf, auf. Der Drehbetätiger weist eine (z. B. nach unten offene) Aufnahme zum (z. B. formschlüssigen) Mitnehmen eines Drehriegels einer Befestigungsvorrichtung zum Einspannen des Formatteils auf. Vorteilhaft kann der Drehbetätiger auf einfache Weise eine Montage und/oder Demontage des Formatteils ermöglichen. Bspw. kann der Drehbetätiger einfach über einen Drehriegel einer Befestigungsvorrichtung übergestülpt werden, sodass sich der Drehriegel von dem Drehbetätiger mitnehmen lässt und/oder umgekehrt, wenn der Drehriegel bspw. selbsttätig in eine bestimmte Stellung, z. B. Verriegelungsstellung, dreht. Zusätzlich kann der Drehbetätiger ein hygienisches Design fördern, bei dem die Befestigungsvorrichtung von dem Drehbetätiger hygienisch abgedeckt ist.

Beispielsweise kann der Drehbetätiger sich auf einer Oberseite des Hauptkörpers abstützen. Vorzugsweise kann das Formatteil im Wesentlichen eine Ringsegmentform, vorzugsweise Halbringsegmentform, aufweisen.

Bevorzugt kann der Hauptkörper eine profilierte oder konturierte Führungsfläche zum Führen der Behälter aufweisen, z. B. mit einer Sägezahnkontur.

In einem Ausführungsbeispiel ist der Drehbetätiger im Wesentlichen haubenförmig und/oder als Hohlkörper ausgeführt. Alternativ oder zusätzlich weist das Formatteil, vorzugsweise der Hauptkörper, mindestens ein gebogenes Langloch auf, in dem der Drehbetätiger beim Drehen geführt ist. Alternativ oder zusätzlich ist die Aufnahme oberhalb von einem Durchgangsloch des Hauptkörpers zum Durchführen des Drehriegels angeordnet.

In einem weiteren Ausführungsbeispiel weist das Formatteil ferner mindestens einen Positionierabschnitt zum Schwenken und/oder Positionieren des Formatteils an mindestens einer Positioniervorrichtung auf. Vorzugsweise kann der mindestens eine Positionierabschnitt als eine abgerundete (z. B. im Wesentlichen halbkreisförmige) Vertiefung ausgebildet und bevorzugt endseitig oder stirnseitig am Hauptkörper angeordnet sein.

Auch betrifft die Erfindung eine Behälterbehandlungsmaschine (z. B. Füller, Verschließer oder Etikettierer) oder eine Behältertransportmaschine (z. B. Transportstern und/oder auch als Teil einer Behälterbehandlungsmaschine), die ein Formatteil zum Führen von Behältern und eine Befestigungsvorrichtung wie hierin offenbart aufweist. Vorzugsweise kann das Formatteil das Sperrelement kontaktieren. Alternativ oder zusätzlich kann bspw. das Sperrelement so angeordnet sein, dass es beim Aufsetzen des Formatteils auf die Befestigungsvorrichtung von dem Formatteil zu der Freigabestellung verschiebbar ist.

In einem Ausführungsbeispiel ist das Formatteil wie hierin offenbart ausgeführt. Der Drehriegel ist in der Aufnahme des Drehbetätigers angeordnet und zum Drehen mit dem Drehbetätiger verbunden, vorzugsweise formschlüssig und/oder kraftschlüssig.

In einem weiteren Ausführungsbeispiel weist die Maschine ferner mindestens eine Positioniervorrichtung auf, an der das Formatteil geneigt ansetzbar und zum Schwenken auf die Befestigungsvorrichtung führbar ist.

Vorzugsweise kann die Positioniervorrichtung eine Stützfläche, die das Formatteil vorzugsweise von unten abstützt, aufweisen.

Bevorzugt kann die Positioniervorrichtung ein elastisches Element aufweisen, an dem das Formatteil beim Ansetzen an die Positioniervorrichtung anliegt.

In einem weiteren Ausführungsbeispiel weist die Maschine ferner ein weiteres Formatteil zum Führen von Behältern wie hierin offenbart und eine weitere Befestigungsvorrichtung wie hierin offenbart für das weitere Formatteil auf. Vorzugsweise sind der Drehriegel der Befestigungsvorrichtung und der Drehriegel der weiteren Befestigungsvorrichtung visuell voneinander unterscheidbar gekennzeichnet. Alternativ oder zusätzlich sind der Drehriegel der Befestigungsvorrichtung und der Drehriegel der weiteren Befestigungsvorrichtung unterschiedlich dimensioniert, vorzugsweise breit. Vorzugsweise kann somit bspw. sichergestellt werden, dass unterschiedliche Formatteile an der richtigen Position befestigt werden.

Daneben betrifft die Erfindung ein Verfahren zur Montage eines Formatteils zum Führen von Behältern in einer Behältertransportmaschine oder Behälterbehandlungsmaschine. Das Verfahren weist ein (z. B. geneigtes) Ansetzen des Formatteils an mindestens einer Positioniervorrichtung auf. Das Verfahren weist ein Schwenken des an der Positioniervorrichtung angesetzten Formatteils auf eine Befestigungsvorrichtung, vorzugsweise von oben, auf. Das Verfahren weist ein Befestigen des auf die Befestigungsvorrichtung geschwenkten Formatteils an der Befestigungsvorrichtung, vorzugweise mittels einer selbststätigen Verriegelung zwischen dem Formatteil und der Befestigungsvorrichtung, auf. Mit dem Verfahren können vorteilhaft die gleichen Vorteile erzielt werden, die hierin für die Befestigungsvorrichtung erläutert sind. Zusätzlich kann die spezielle Art der Befestigung mittels des Schwenkens dafür sorgen, dass im (Behälter-) Crashfall eine Demontage des Formatteils weiterhin möglich ist und genügend Platz für eine Reinigung zur Verfügung steht.

In einer Ausführungsform ist die Befestigungsvorrichtung wie hierin offenbart ausgebildet, und das Formatteil bewegt beim Schwenken auf die Befestigungsvorrichtung das Sperrelement in die Freigabestellung, wodurch der Drehriegel mittels Vorspannung selbsttätig zu der zweiten Riegelstellung dreht, in der der Drehriegel das Formatteil vorzugsweise einspannt (z. B. zwischen sich und einem Führungselement der Befestigungsvorrichtung).

In einer weiteren Ausführungsform ist das Formatteil wie hierin offenbart ausgebildet. Der Drehriegel ist in der Aufnahme des Drehbetätigers angeordnet, und der Drehriegel ist mittels Drehung des Drehbetätigers zum Entnehmen des Formatteils entriegelbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht eines Formatteils gemäß einem Ausführungsbeispiel der vorliegenden Offenbarung;
- Figur 2: eine Ansicht des Formatteils von Figur 1 in einer Ansicht von unten;
- Figur 3: eine Schnittansicht eines Befestigungssystems zum Befestigen eines Formatteils;
- Figur 4: eine Draufsicht auf das Befestigungssystem von Figur 3;
- Figur 5: eine Befestigungsvorrichtung des Befestigungssystems gemäß Detail X von Figur 3;
- Figur 6: eine perspektivische Ansicht der Befestigungsvorrichtung von Figur 5;
- Figur 7: eine Explosionsdarstellung der Befestigungsvorrichtung von Figur 5;
- Figur 8: einen Montageschritt beim Montieren eines Formatteils auf eine Befestigungsvorrichtung in einer Schnittansicht durch das Formatteil und die Befestigungsvorrichtung;
- Figur 9: einen weiteren Montageschritt beim Montieren des Formatteils auf die Befestigungsvorrichtung in einer Schnittansicht durch das Formatteil und die Befestigungsvorrichtung;
- Figur 10: einen weiteren Montageschritt beim Montieren des Formatteils auf die Befestigungsvorrichtung in einer Schnittansicht durch das Formatteil und die Befestigungsvorrichtung;
- Figur 11: den weiteren Montageschritt beim Montieren des Formatteils auf die Befestigungsvorrichtung gemäß Figur 10 in einer Schnittansicht entlang einer Linie Y-Y in Figur 10;
- Figur 12: eine Schnittansicht durch das Formatteil und das Befestigungssystem, wobei das Formatteil an dem Befestigungssystem befestigt ist; und
- Figur 13: eine weitere Schnittansicht durch das Formatteil und das Befestigungssystem entlang einer Linie Z-Z in Figur 12.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

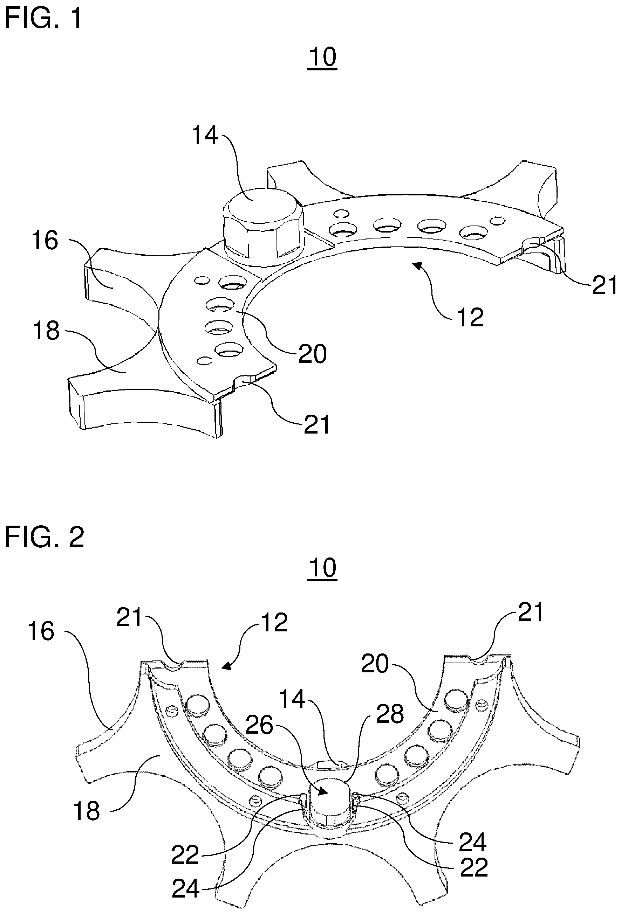

Die Figuren 1 und 2 zeigen ein Formatteil 10. Das Formatteil 10 ist zum Führen von Behältern beim Behältertransport ausgebildet. Beispielsweise können die Behälter als Flaschen, Dosen, Kanister, Kartons, Flakons usw. ausgeführt sein. Bspw. kann das Formatteil 10 in einer Behältertransportmaschine (z. B. Transportstern oder Linearförderer) zum Führen der Behälter beim Behältertransport umfasst sein. Alternativ kann das Formatteil 10 in einer Behälterbehandlungsmaschine (z. B. Füller, Verschließer und/oder Etikettierer usw.) zum Führen der Behälter beim Behältertransport in der Behälterbehandlungsmaschine umfasst sein.

Das in den Figuren 1 und 2 dargestellte Formatteil 10 ist ein drehbares bzw. rotatives Formatteil 10, das sich beim Führen der Behälter mit den Behältern dreht. In alternativen Ausführungsformen kann sich das Formteil 10 bspw. auf eine andere Weise mit den Behältern mitbewegen oder bspw. als ein stationäres Formteil bzw. zum starren Führen der Behälter ausgeführt sein.

Das Formatteil 10 weist einen Hauptkörper 12 und einen Drehbetätiger 14 auf.

Der Hauptkörper 12 kann bspw. im Wesentlichen eine Ringsegmentform aufweisen, wie in den Figuren 1 und 2 dargestellt ist. Alternativ kann der Hauptkörper 12 jegliche andere Form aufweisen, vorzugsweise angepasst an die zu führenden Behälter.

Der Hauptkörper 12 kann eine Führungsfläche 16 aufweisen. An der Führungsfläche 16 können die Behälter beim Transport geführt werden. Die Führungsfläche 16 kann beispielsweise eine (Außen-) Mantelfläche des Hauptkörpers 12 sein. Eine Form der Führungsfläche 16 kann an die zu führenden Behälter angepasst sein, vorzugsweise an deren Form und/oder deren Größe. Die Führungsfläche 16 kann zum Führen oder Mitnehmen der Behälter konturiert bzw. profiliert sein. Die Kontur kann bspw. eine Sägezahnkontur sein. Alternativ kann die Führungsfläche bspw. eben oder glatt sein.

Der Hauptkörper 12 kann einteilig oder mehrteilig sein. Beispielsweise kann der Hauptkörper 12 einen ersten Körperteil 18 und einen zweiten Körperteil 20 aufweisen.

Der erste Körperteil 18 kann ringsegmentförmig sein. Der erste Körperteil 18 kann die Führungsfläche 16 aufweisen. Der erste Körperteil 18 kann bspw. aus Kunststoff hergestellt sein.

Der zweite Körperteil 20 kann ringsegmentförmig sein. Der zweite Körperteil 20 kann den Drehbetätiger 14 halten. Der zweite Körperteil 20 kann bspw. aus Metall hergestellt sein.

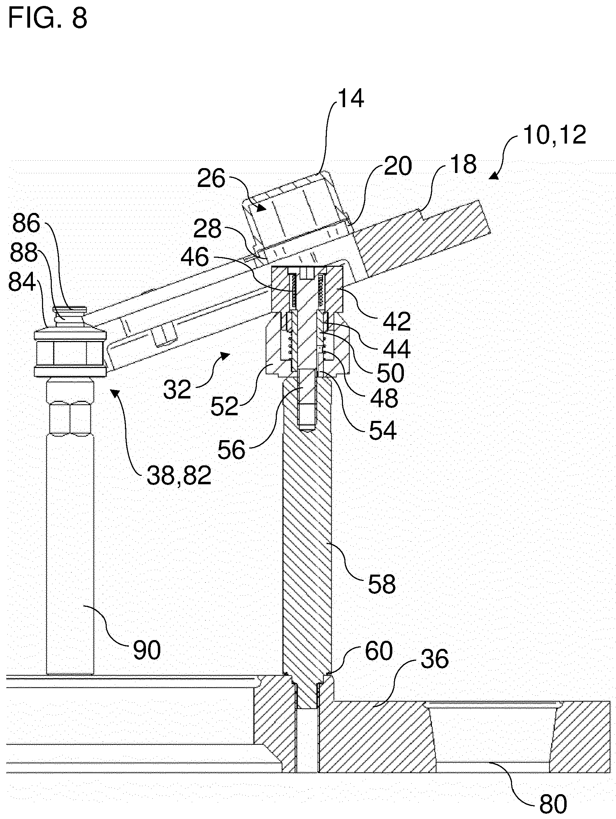

Der erste Körperteil 18 und der zweite Körperteil 20 können aneinander befestigt sein, z. B. mittels Schraubverbindung(en) (nicht in Figuren 1 und 2 dargestellt, siehe jedoch bspw. Figuren 8, 9, 10 und 12). Der zweite Körperteil 20 kann auf den ersten Körperteil 18 aufgesetzt sein. Es ist auch möglich, dass der erste Körperteil 18 und der zweite Körperteil 20 bspw. integral-einstückig miteinander verbunden bzw. ausgebildet sind.

Der Hauptkörper 12 kann bspw. stirnseitig mindestens einen Positionierabschnitt 21 aufweisen. Mittels des Positionierabschnitts 21 kann das Formatteil 10 an mindestens einer Positioniervorrichtung angesetzt und auf eine Befestigungsvorrichtung zum Befestigen des Formatteils 10 geschwenkt werden. Bevorzugt kann der mindestens eine Positionierabschnitt 21 als eine abgerundete Vertiefung ausgebildet sein.

Der Drehbetätiger 14 kann bevorzugt auf einer Oberseite des Hauptkörpers 12, vorzugsweise des zweiten Körperteils 20, angeordnet sein. Der Drehbetätiger 14 kann mittig auf der Oberseite angeordnet sein. Der Drehbetätiger 14 kann sich an dem Hauptkörper 12 abstützen. Der Drehbetätiger 14 kann bevorzugt als Drehknopf ausgeführt sein.

Der Drehbetätiger 14 kann zwischen einer ersten Drehbetätigerstellung und einer zweiten Drehbetätigerstellung drehbar sein. Der Drehbetätiger 14 kann drehbar an dem Hauptkörper 12, vorzugsweise dem zweiten Körperteil 20, geführt bzw. gelagert sein. Beispielsweise kann der Hauptkörper 12, vorzugsweise der zweite Körperteil 20, mindestens ein gebogenes Langloch 22 aufweisen. Das Langloch kann koaxial zu einer Drehachse eines Drehriegels einer Befestigungsvorrichtung gebogen sein. Vorzugsweise sind zwei einander gegenüberliegende, bevorzugt koaxial verlaufende, gebogene Langlöcher 22 vorgesehen.

Der Drehbetätiger 14 kann mindestens ein Führungselement 24 aufweisen. Das mindestens eine Führungselement 24 kann bspw. an einer Unterseite des Drehbetätigers 14 angeordnet sein. Bspw. kann das mindestens eine Führungselement 24 von unten mit einem Hauptkörper 12 des Drehbetätigers 14 vorzugsweise lösbar verbunden sein, z. B. eingesteckt oder eingeschraubt. Das mindestens eine Führungselement 24 kann bspw. als Führungsstift, Führungszapfen oder Führungsbolzen ausgeführt sein. Das mindestens eine Führungselement 24 kann in dem mindestens einen gebogenen Langloch 22 geführt sein. Es ist möglich, dass das mindestens eine Führungselement 24 an dessen freien Ende einen Bund, Absatz oder Kragenabschnitt aufweist, mit dem der Drehbetätiger 14 vor einem Abheben von dem Hauptkörper 12 im mindestens einen Langloch 22 gesichert ist.

Der Drehbetätiger 14 kann ein Aufnahme 26 aufweisen. Bevorzugt ist der Drehbetätiger 14 als Hohlkörper und/oder haubenförmig mit der nach unten offenen Aufnahme 26 ausgeführt. Die Aufnahme 26 ist bevorzugt zum formschlüssigen Mitnehmen eines Drehriegels einer Befestigungsvorrichtung zum Einspannen des Formatteils ausgebildet, wie hierin anhand des Ausführungsbeispiels noch im Detail erläutert ist. Die Aufnahme 26 kann bspw. einen rotationsasymmetrischen Querschnitt, z. B. einen ovalen oder mehreckigen Querschnitt, aufweisen.

Der Drehbetätiger 14 kann oberhalb von einem Durchgangsloch 28 des Hauptkörpers 12 angeordnet sein. Das Durchgangsloch 28 kann eine Oberseite und eine Unterseite des Hauptkörpers 12 miteinander verbinden. Die Aufnahme 26 und das Durchgangsloch 28 können eine gemeinsame Mittelachse aufweisen. Durch das Durchgangsloch 28 kann der Drehriegel der Befestigungsvorrichtung lösbar in die Aufnahme 26 eingeführt werden. Das mindestens eine gebogene Langloch 22 kann koaxial zu der gemeinsamen Mittelachse verlaufen.

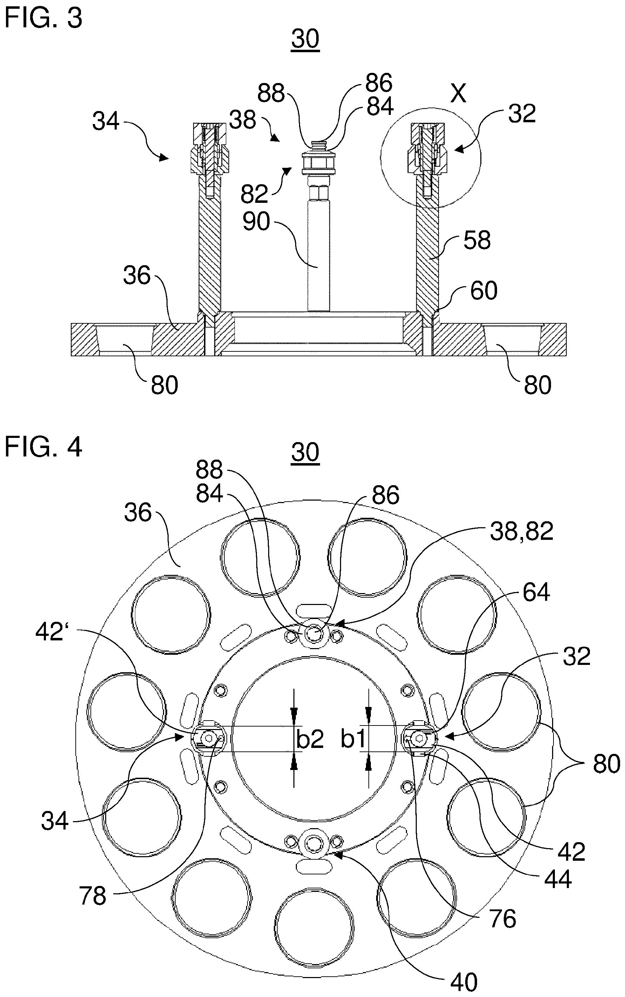

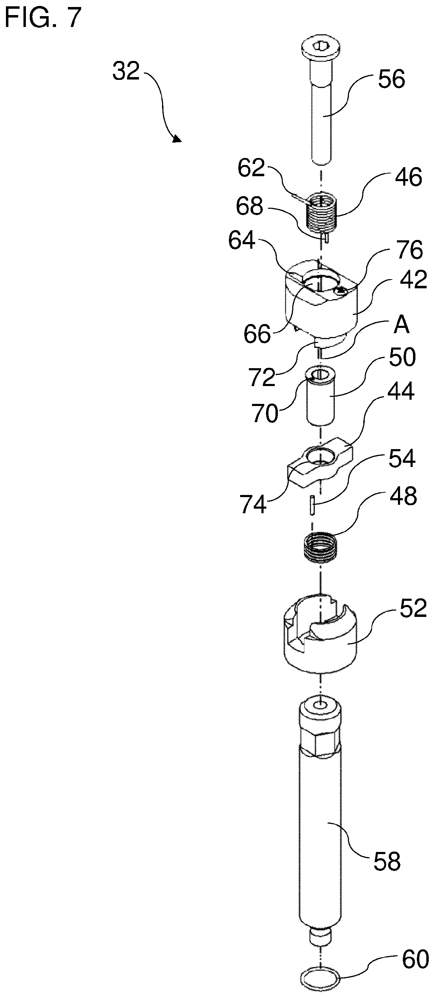

Die Figuren 3 bis 7 zeigen ein Befestigungssystem 30 bzw. Details davon.

Das Befestigungssystem 30 weist mindestens eine Befestigungsvorrichtung 32, 34 auf, die bevorzugt zum werkzeugloses Schnellwechseln des Formatteils 10 ausgebildet ist. Das Befestigungssystem 30 kann eine Trägervorrichtung 36 und/oder mindestens eine Positioniervorrichtung 38, 40 aufweisen.

Die Befestigungsvorrichtung 32 weist einen Drehriegel 42 und ein Sperrelement 44 auf. Die Befestigungsvorrichtung 32 kann ferner ein Vorspannelement 46, ein Vorspannelement 48, eine Führungshülse 50, eine Führungselement 52, ein Positionierelement 54, einen Bolzen 56, einen Stabkörper 58 und/oder einen Dichtring 60 aufweisen.

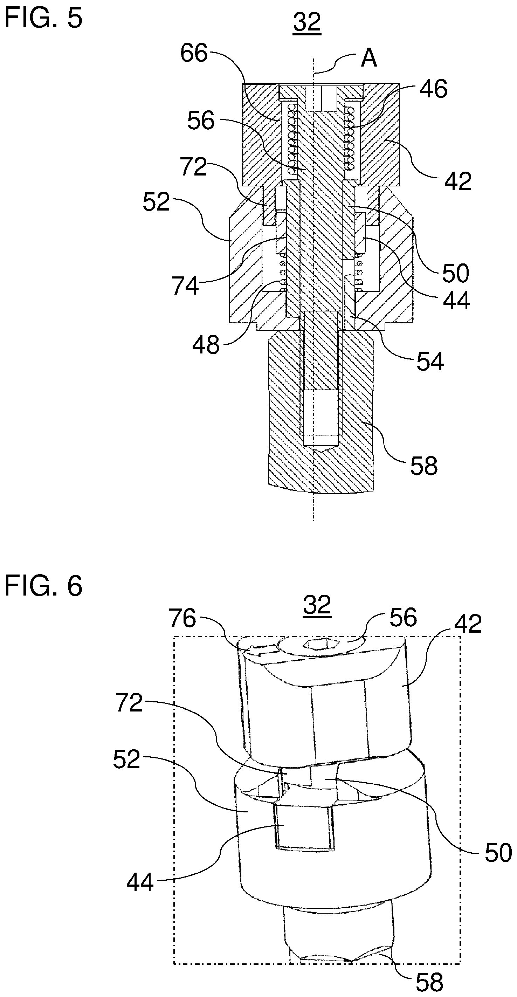

Der Drehriegel 42 dient zum Einspannen des Formatteils 10. Der Drehriegel 42 ist zwischen einer ersten Riegelstellung, vorzugsweise Entriegelungsstellung, und einer zweiten Riegelstellung, vorzugsweise Verriegelungsstellung, um eine Drehachse A drehbar. Die Figuren 5, 6, 12 und 13 zeigen den Drehriegel 42 bspw. in der Verriegelungsstellung. Die Figuren 8, 9, 10 und 11 zeigen den Drehriegel 42 bspw. in der Entriegelungsstellung.

Der Drehriegel 42 kann zum Drehen zu der zweiten Riegelstellung elastisch vorgespannt sein. Vorzugsweise kann das Vorspannelement 46 den Drehriegel 42 vorspannen. Das Vorspannelement 46 kann dazu ausgebildet sein, den Drehriegel 42 zum Drehen zu der zweiten Riegelstellung vorzuspannen. Ist der Drehriegel 42 nicht in der ersten Riegelstellung durch das Sperrelement 44 blockiert oder gibt das Sperrelement 44 den Drehriegel 42 in der ersten Riegelstellung frei, so dreht der Drehriegel 42 unter Wirkung des Vorspannelements 46 zu der zweiten Riegelstellung.

Eine Außenkontur des Drehriegels 42 kann an einen Querschnitt der Aufnahme 26 des Drehbetätigers 14 angepasst sein. Vorzugsweise kann der Drehbetätiger 14 den Drehriegel 42 mittels Formschluss zwischen der Aufnahme 26 und dem Drehriegel 42 mitnehmen, und umgekehrt.

Der Drehriegel 42 kann unterseitig einen Kragenabschnitt 72 aufweisen. Der Kragenabschnitt 72 verläuft vorzugsweise koaxial zur Drehachse A. Mittels des Kragenabschnitts 72 kann der Drehriegel 42 an einem oberen Abschnitt des Führungselements 52 drehbar geführt sein. Mittels des Kragenabschnitts 72 kann der Drehriegel 42 an dem Führungselement 52 zentriert sein.

Das Sperrelement 44 ist zwischen einer, vorzugsweise oberen, Sperrstellung und einer, vorzugsweise unteren, Freigabestellung koaxial zu der Drehachse A verschiebbar.

Das Sperrelement 44 ist vorzugsweise unterhalb von dem Drehriegel 42 und/oder oberhalb von dem Vorspannelement 48 angeordnet. Das Sperrelement 44 kann bezüglich der Drehachse A bspw. auf Höhe des Führungselements 52 und/oder der Führungshülse 50 angeordnet sein.

In der Sperrstellung sperrt bzw. blockiert das Sperrelement 44 den Drehriegel 42 in der ersten Riegelstellung. In der Sperrstellung kann das Sperrelement 44 den Drehriegel 42 verdrehsicher bezüglich der Drehachse A in der ersten Riegelstellung festlegen. Ist der Drehriegel 42 in der ersten Riegelstellung durch das Sperrelement 44 gesperrt, kann der Drehriegel 42 nicht in die zweite Riegelstellung bewegt werden. Die Bewegung ist durch das Sperrelement 44 blockiert. Der Drehriegel 42 kann erst wieder zu der zweiten Riegelstellung gedreht werden, wenn das Sperrelement 44 in der Freigabestellung ist. In der Sperrstellung greift das Sperrelement 44 bevorzugt in den Drehriegel 42 ein, vorzugsweise von unten. Beispielsweise greift das Sperrelement 44 in der Sperrstellung in eine Ausnehmung im Kragenabschnitt 72 ein.

In der Freigabestellung kann der Drehriegel 42 zwischen der ersten Riegelstellung und der zweiten Riegelstellung gedreht werden. Das Sperrelement 44 greift nicht in den Drehriegel 42 ein. Das Sperrelement 44 legt den Drehriegel 42 nicht verdrehsicher fest.

Vorzugsweise ist das Sperrelement 44 als ein Stab, besonders bevorzugt Flachstab, ausgeführt. Das Sperrelement 44 kann ein Durchgangsloch 74 für die Führungshülse 50 und/oder den Bolzen 56 aufweisen. Das Durchgangsloch 74 kann mittig im Sperrelement 44 angeordnet sein. Das Durchgangsloch 74 kann koaxial zur Drehachse A sein. Das Sperrelement 44 kann quer zu der Drehachse A ausgerichtet sein.

Das Sperrelement 44 kann elastisch zum Verschieben zu der Sperrstellung vorgespannt sein. Vorzugsweise kann das Vorspannelement 48 das Sperrelement 44 vorspannen.

Das Vorspannelement 46 kann ein vorzugsweise zentrales Durchgangsloch für den Bolzen 56 aufweisen. Das Vorspannelement 46 kann in einem vorzugsweise zentralen Durchgangsloch 66 des Drehriegels 42 angeordnet sein. Das Durchgangsloch 66 kann koaxial zur Drehachse A sein. Das Vorspannelement 46 kann bevorzugt als eine Torsionsfeder bzw. Drehfeder ausgeführt sein. Das Vorspannelement 46 ist bevorzugt koaxial zur Drehachse A angeordnet ist. Das Vorspannelement 46 kann ein Ende 62 aufweisen, das am Drehriegel 42 gehalten ist. Beispielsweise kann das Ende 62 in einem Langloch bzw. Schlitz 64 des Drehriegels 42 gehalten sein. Der Schlitz 64 ist bevorzugt von einer Oberseite des Drehriegels 42 zugänglich. Das Vorspannelement 46 kann ein Ende 68 aufweisen, das an bzw. in der Führungshülse 50 gehalten ist. Beispielsweise kann das Ende 62 in einem Loch 70, vorzugsweise Längsloch bzw. Längsbohrung, der Führungshülse 50 gehalten sein. Das Loch 70 kann stirnseitig bzw. oberseitig an der Führungshülse 50 zugänglich sein. Das Loch 70 kann sich parallel zur Drehachse A erstrecken. Das Loch 70 kann sich durch eine ringförmige Außenwand der Führungshülse 50 erstrecken.

Das Vorspannelement 48 kann unterhalb von dem Sperrelement 44 angeordnet sein. Das Vorspannelement 48 kann in dem Führungselement 52 aufgenommen sein. Das Vorspannelement 48 kann sich an dem Führungselement 52 abstützen. Bevorzugt ist das Vorspannelement 48 als eine Schraubenfeder ausgeführt. Das Vorspannelement 48 kann ein, vorzugsweise zentrales, Durchgangsloch für den Bolzen 56 aufweisen. Das Durchgangsloch kann koaxial zur Drehachse A sein.

Die Führungshülse 50 kann das Sperrelement 44 bezüglich der Drehachse A verschiebbar führen. Die Führungshülse 50 kann sich durch das Durchgangsloch 74 des Sperrelements 44 erstrecken. Eine Mantelfläche der Führungshülse 50 kann an einer Umfangsfläche des Durchgangslochs 74 anliegen. Die Führungshülse 50 kann ein, vorzugsweise zentrales, Durchgangsloch für den Bolzen 56 aufweisen. Das Durchgangsloch ist bevorzugt koaxial zur Drehachse A.

Die Führungshülse 50 kann verdrehsicher bezüglich der Drehachse A angeordnet sein. Der Bolzen 56 kann die Führungshülse 50 verdrehsicher festlegen. Bspw. kann der Bolzen 56 einen Absatz aufweisen, der an einer Oberseite der Führungshülse 50 anliegt. Der Absatz kann die Führungshülse 50 nach unten gegen das Führungselement 52 und damit gegen den Stabkörper 58 drücken.

Das Sperrelement 44 kann verschiebbar in dem Führungselement 52 geführt sein. Das Führungselement 52 kann das Sperrelement 44 und/oder das Vorspannelement 48 aufnehmen. Das Führungselement 52 kann das Sperrelement 44 bezüglich der Drehachse A verdrehsicher führen. Bspw. kann das Führungselement 52 eine nach oben offene Ausnehmung aufweisen, in der ein Ende des Sperrelements 44 verdrehsicher entlang der Drehachse A geführt werden kann. Im Ausführungsbeispiel weist das Führungselement 52 zwei einander gegenüberliegende Ausnehmungen in einer umlaufenen Ringwand auf, in denen entgegengesetzte Enden des Sperrelements 42 verdrehsicher entlang der Drehachse A verschiebbar sind. Das Führungselement 52 kann ein vorzugsweise zentrales Durchgangsloch für den Bolzen 56 und/oder die Führungshülse 50 aufweisen. Das Durchgangsloch ist bevorzugt koaxial zur Drehachse A.

Das Führungselement 52 kann verdrehsicher festgelegt sein. Vorzugsweis ist das Führungselement 52 durch den Bolzen 56 verdrehsicher festgelegt. Der Bolzen 56 kann von oben gegen die Führungshülse 50 drücken, sodass das Führungselement 52 zwischen der Führungshülse 50 und dem Stabkörper 58 geklemmt ist.

Das Positionierelement 54 kann das Führungselement 52 und die Führungshülse 50 relativ zueinander positionieren. Dadurch kann bspw. eine gewünschte Positionierung des Lochs 70 für das Vorspannelement 46 erreicht werden. Das Positionierelement 54 kann in die Führungshülse 50 und in das Führungselement 52 eingreifen. Das Positionierelement 54 kann bspw. als ein Stift (z. B. Zylinderstift) ausgeführt sein.

Der Bolzen 56 kann den Drehriegel 42, das Vorspannelement 46, die Führungshülse 50, und das Führungselement 52 axial bezüglich der Drehachse A sichern. Der Bolzen 56 kann die Führungshülse 50 und das Führungselement 52 zwischen sich und dem Stabkörper 58 verdrehsicher klemmen. Der Bolzen 56 kann sich durch die Durchgangslöcher des Vorspannelements 46, des Drehriegels 42, der Führungshülse 50, des Sperrelements 44, des Führungselements 52 und/oder des Vorspannelements 48 hindurch erstrecken. Der Bolzen 56 kann in den Stabkörper 58 eingeschraubt sein. Ein Bolzenkopf des Bolzens 56 kann im Durchgangsloch 66 positioniert sein. Der Bolzen 56 kann koaxial zur Drehachse A angeordnet sein.

Der Stabkörper 58 kann ein Schraubenloch zum Einschrauben des Bolzens 56 aufweisen. Das Schraubenloch kann an einer Oberseite des Stabkörpers 58 angeordnet sein. Der Stabkörper 58 kann an der Trägervorrichtung 36, vorzugsweise einer Trägerplatte davon, befestigt, z. B. eingeschraubt, sein. Die Schraubverbindung zwischen dem Stabkörper 58 und der Trägervorrichtung 36 kann mittels des Dichtrings 60 abgedichtet sein. Der Stabkörper 58 kann koaxial zur Drehachse A angeordnet sein.

Die Befestigungsvorrichtung 34 kann im Wesentlichen wie die Befestigungsvorrichtung 32 ausgeführt sein. An der Befestigungsvorrichtung 34 kann ebenfalls ein Formalteil ähnlich zu dem Formatteil 10 befestigt werden. Die Befestigungsvorrichtungen 32 und 34 können einander bezüglich der Trägervorrichtung 36 gegenüberliegend angeordnet sein.

Ein Unterschied zwischen den Befestigungsvorrichtungen 32 und 34 kann darin bestehen, dass die Befestigungsvorrichtungen 32 und 34 unterschiedlich gekennzeichnet sind, z. B. mit Formen, Buchstaben und/oder Zahlen. Die Befestigungsvorrichtung 32 kann bspw. eine Kennzeichnung 76 aufweisen, die sich von einer Kennzeichnung 78 der Befestigungsvorrichtung 34 unterscheidet. Beispielsweise kann die Kennzeichnung 76 ein Pfeil sein, und die Kennzeichnung 78 kann ein Kreis sein. Die Kennzeichnung 76 kann von außen sichtbar an der Befestigungsvorrichtung 32 angeordnet sein, vorzugsweise an dem Drehriegel 42, besonders bevorzugt an einer Oberseite des Drehriegels 42. Die Kennzeichnung 78 kann von außen sichtbar an der Befestigungsvorrichtung 34 angeordnet sein, vorzugsweise an dem Drehriegel 42' der Befestigungsvorrichtung 34, besonders bevorzugt an einer Oberseite des Drehriegels 42' der Befestigungsvorrichtung 34.

Alternativ oder zusätzlich kann ein Unterschied zwischen den Befestigungsvorrichtungen 32 und 34 darin bestehen, dass der Drehriegel 42 der Befestigungsvorrichtung 32 anders dimensioniert ist als der Drehriegel 42' der Befestigungsvorrichtung 34. Beispielsweise kann eine Breite b1 des Drehriegels 42 größer sein als eine Breite b2 des Drehriegels 42' der Befestigungsvorrichtung 34 (siehe Figur 4). Die Breite b1 bzw. b2 kann vorzugsweise in einer Ebene senkrecht zur Drehachse A gemessen werden, bevorzugt parallel zu einer Längsachse des Sperrelement 44.

Die Trägervorrichtung 36 kann bspw. als runde oder ringförmige Platte ausgeführt sein. Die Trägervorrichtung 36 kann mehrere Durchgangslöcher 80 aufweisen. Die Durchgangslöcher 80 können um einen Umfang der Trägervorrichtung 36 herum angeordnet sein, vorzugsweise in gleichen Abständen. Die Durchgangslöcher 80 können eine Unterseite der Trägervorrichtung 36 mit einer Oberseite der Trägervorrichtung 36 verbinden. In den Durchgangslöchern 80 können bspw. Behälterstützplatten zum bodenseiteigen Abstützen von zu transportierenden Behältern angeordnet sein. Im Betrieb kann sich die Trägervorrichtung 36 zusammen mit dem Formatteil 10, der Befestigungsvorrichtung 32 usw. drehen.

Die Positioniereinrichtungen 38 und 40 können einander bezüglich der Trägervorrichtung 36 gegenüberliegend angeordnet sein. Die Positioniereinrichtungen 38, 40 können das Formatteil 10 beim Montieren an die Befestigungsvorrichtung 32 positionieren. Das Formatteil 10 kann geneigt an den Positioniervorrichtungen 38, 40 ansetzbar sein. Die Positioniereinrichtungen 38, 40 können das Formatteil 10 beim Schwenken auf die Befestigungsvorrichtung 32 führen. Vorzugsweise können die Positionierabschnitte 21 des Formatteils 10 an den Positioniereinrichtungen 38, 40 angesetzt werden.

Die Positioniereinrichtungen 38, 40 können im Wesentlichen gleich oder sogar als Gleichteile ausgeführt sein. Nachfolgend ist der Einfachheit halber daher lediglich die Positioniereinrichtung 38 beschrieben. Die Ausführungen gelten entsprechend für die Positioniereinrichtung 40.

Die Positioniereinrichtung 38 kann ein Positionierelement 82 aufweisen. Das Positionierelement 82 kann eine Stützfläche 84, einen zylinderförmigen Abschnitt 86 und/oder ein elastisches Element 88 aufweisen.

An der Stützfläche 84 kann das Formatteil 10 abgestützt werden. Die Stützfläche kann bspw. eine Ringform oder eine Ringsegmentform aufweisen. Die Stützfläche 84 kann in einer Ebene senkrecht zur Drehachse A liegen. Ein Außenumfangsbereich der Stützfläche 84 kann bspw. angefast oder angeschrägt sein.

Der zylinderförmige Abschnitt 86 kann oberhalb von der Stützfläche 84 angeordnet sein. Der zylinderförmige Abschnitt 86 kann parallel zu der Drehachse A angeordnet sein. An dem zylinderförmigen Abschnitt 86 kann der Positionierabschnitt 21 des Formatteils 10 angesetzt werden. Es ist möglich, dass das elastische Element 88, z. B. ein Gummiring, um den zylinderförmigen Abschnitt 86 gelegt ist. Das elastische Element 88 kann ein beschädigungsfreies Ansetzen des Formatteils 10 an dem Positionierelement 82 ermöglichen. Dadurch wird das Formatteil 10 zwischen dem elastischen Element 88 und dem Positionierelement 82 spielfrei eingespannt.

Das Positionierelement 82 kann bspw. in einen Stabkörper 90 eingeschraubt sein, der bspw. in die Trägervorrichtung 36 eingeschraubt ist. Der Stabkörper 90 kann wie der Stabkörper 58 ausgebildet und/oder parallel zu dem Stabkörper 58 angeordnet sein.

Nachfolgend ist unter Bezugnahme auf die Figuren 8 bis 13 ein Verfahren zum Montieren eines Formatteils beschrieben. Das Verfahren ist unter Bezugnahme auf das hierin beispielhaft beschriebene Formatteil 10 und die hierin beispielhaft beschriebene Befestigungsvorrichtung 32 beschrieben. Die offenbarte Montagetechnik kann jedoch auch mit einem anders konfigurierten Formatteil zum Führen von Behältern und/oder einer anders konfigurierten Befestigungsvorrichtung angewendet werden.

Figur 8 zeigt einen initialen Schritt beim Montieren des Formatteils 10.

Das Formatteil 10 wird vorzugsweise geneigt an der Positioniervorrichtung 38 (und 40) angesetzt. Ausgehen von der Positioniervorrichtung 38 ist das Formatteil 10 vorzugsweise nach oben geneigt. Das Formatteil 10 kann sich an der Stützfläche 84 abstützen. Das Formatteil 10, vorzugsweise der Positionierabschnitt 21 davon, kann an dem elastischen Element 88 und/oder dem zylinderförmigen Abschnitt 86 anliegen.

Der Drehriegel 42 kann in der Entriegelungsstellung bzw. der ersten Riegelstellung sein. Das Sperrelement 44 kann in der Sperrstellung sein. Das Sperrelement 44 kann durch das Vorspannelement 48 in die Sperrstellung gedrückt werden. Das Sperrelement 44 kann den Drehriegel 42 in der Entriegelungsstellung blockieren. Trotz Vorspannung durch das Vorspannelement 46 kann sich der Drehriegel 42 wegen der Blockade nicht in die Verriegelungsstellung bzw. zweite Riegelstellung drehen.

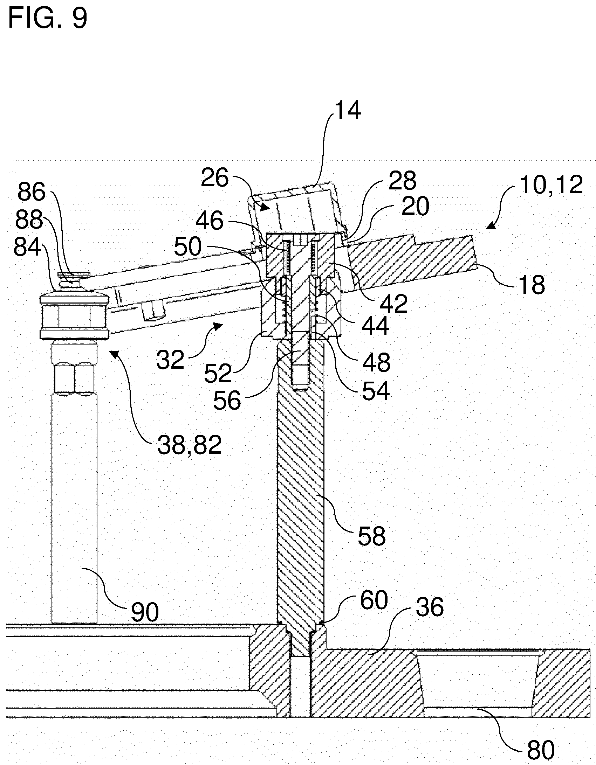

Figur 9 zeigt einen der Figur 8 nachfolgenden Montageschritt.

Das an der Positioniervorrichtung 38 angesetzte Formatteil 10 wird in Richtung zu der Befestigungsvorrichtung 32 geschwenkt, vorzugsweise nach unten. Das Formatteil 10 kann beim Schwenken in Kontakt mit der Positioniervorrichtung 38 bleiben. Vorzugsweise kann das Formatteil 10 weiterhin an der Stützfläche 84 abgestützt sein. Bevorzugt kann das Formatteil 10, vorzugsweise der Positionierabschnitt 21 davon, weiterhin an dem elastischen Element 88 und/oder dem zylinderförmigen Abschnitt 86 anliegen.

Der Drehriegel 42 taucht in die Aufnahme 26 des Drehbetätigers 14 ein. Der Drehriegel 42 kann weiterhin in der Entriegelungsstellung bzw. der ersten Riegelstellung sein. Das Sperrelement 44 kann weiterhin in der Sperrstellung sein.

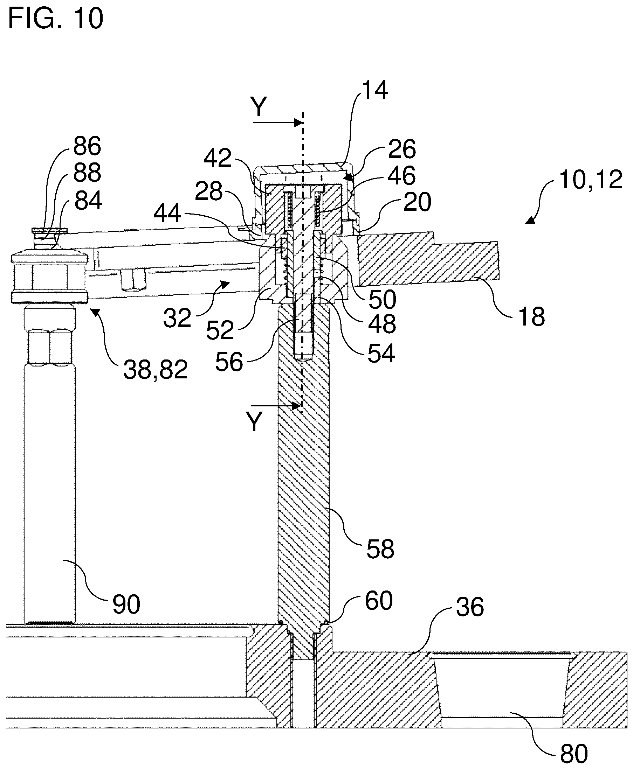

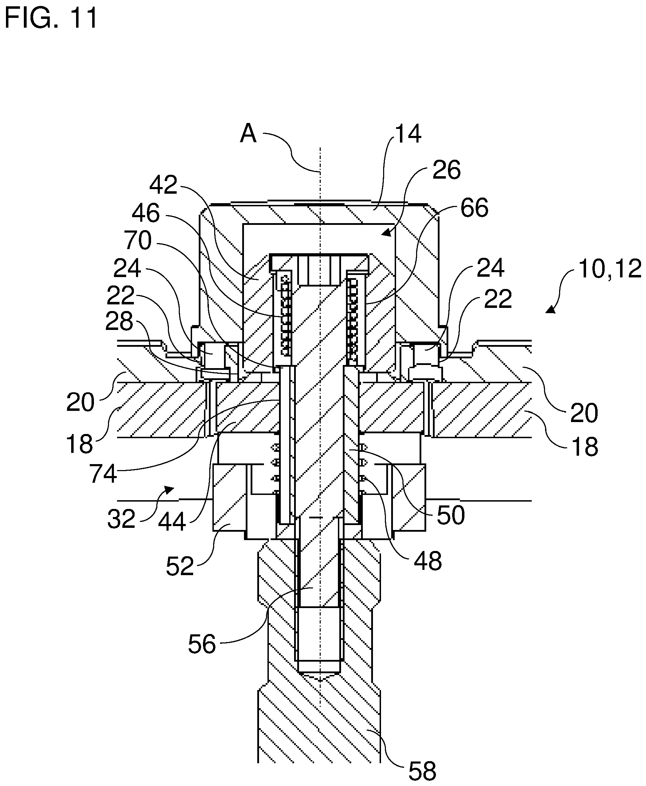

Die Figur 10 und 11 zeigen einen der Figur 9 nachfolgenden Montageschritt.

Das an der Positioniervorrichtung 38 angesetzte Formatteil 10 wird weiter auf die Befestigungsvorrichtung 32 geschwenkt. Das Formatteil 10 kann beim Schwenken weiter in Kontakt mit der Positioniervorrichtung 38 bleiben. Vorzugsweise kann das Formatteil 10 weiterhin an der Stützfläche 84 abgestützt sein. Bevorzugt kann das Formatteil 10, vorzugsweise der Positionierabschnitt 21 davon, weiterhin an dem elastischen Element 88 und/oder dem zylinderförmigen Abschnitt 86 anliegen.

Das Formatteil 10 kann beim Schwenken in Kontakt mit der Sperrelement 44 kommen. Vorzugsweise kann eine Unterseite des Formatteils 10, vorzugweise des Hauptkörpers 12 bzw. des zweiten Körperteils 20, eine Oberseite des Sperrelements 44 kontaktieren. Beim fortgesetzten Schwenken kann das Formatteil 10 das Sperrelement 44 nach unten drücken. Das Sperrelement 44 kann aus der Sperrstellung in Richtung zu der Freigabestellung entlang der Drehachse A verschoben werden. Das Formatteil 10 bewegt das Sperrelement 44 in die Freigabestellung.

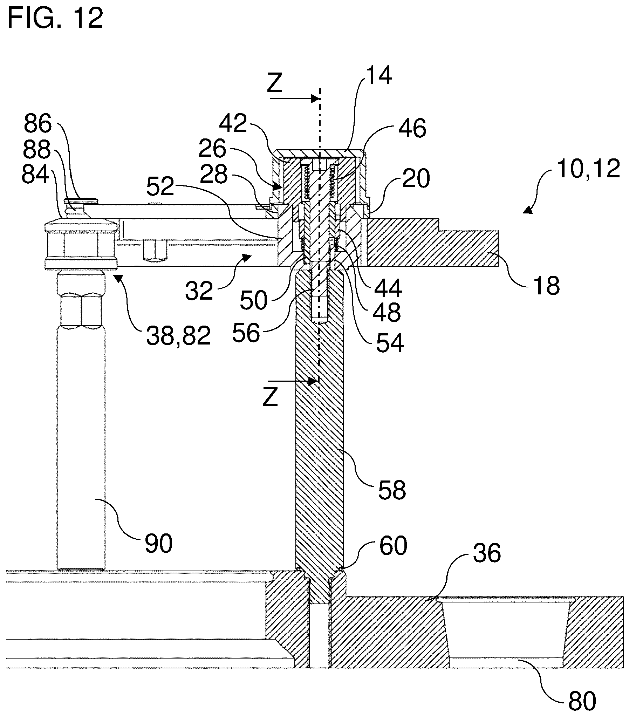

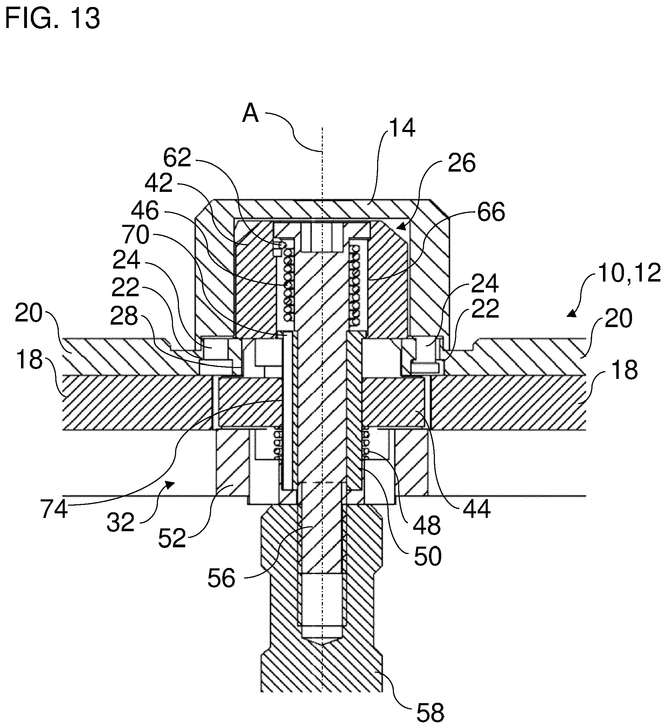

Die Figuren 12 und 13 zeigen eine Endmontageposition.

Das Formatteil 10 kann das Sperrelement 44 in die Freigabestellung bewegt haben. Das Sperrelement 44 kann den Drehriegel 42 freigegeben haben. Der Drehriegel 42 kann sich selbsttätig unter Wirkung des Vorspannelements 46 in die zweite Riegelstellung bzw. Verriegelungsstellung gedreht haben. Das Formatteil 10, vorzugsweise der Hauptkörper 12 bzw. der zweiten Körperteils 20, liegt auf einer Kontaktfläche des Führungselements 52 auf. Das Formatteil 10, vorzugsweise der Hauptkörper 12 bzw. der zweite Körperteil 20, ist zwischen dem Drehriegel 42 (von oben) und dem Führungselement 52 (von unten) eingespannt.

Zum Demontieren des Formatteils 10 kann einfach der Drehbetätiger 14 gedreht werden. Dessen Drehung kann den Drehriegel 42 mitnehmen. Der Drehriegel 42 kann aus der Verriegelungsstellung in die Entriegelungsstellung gedreht werden. Das Formatteil 10 kann entnommen werden, z. B. mittels Schwenken nach oben. Das Sperrelement 44 kann den Drehriegel 42 in der Entriegelungsstellung wieder blockieren.

### Bezugszeichenliste

| | | | |
|---|---|---|---|
| 10 | Formatteil | 54 | Positionierelement |
| 12 | Hauptkörper | 56 | Bolzen |
| 14 | Drehbetätiger | 58 | Stabkörper |
| 16 | Führungsfläche | 60 | Dichtring |
| 18 | erster Körperteil | 62 | Ende |
| 20 | zweiter Körperteil | 64 | Schlitz |
| 21 | Positionierabschnitt | 66 | Durchgangsloch |
| 22 | Langloch | 68 | Ende |
| 24 | Führungselement | 70 | Loch |
| 26 | Aufnahme | 72 | Kragenabschnitt |
| 28 | Durchgangsloch | 74 | Durchgangsloch |
| 30 | Befestigungssystem | 76 | Kennzeichnung |
| 32 | Befestigungsvorrichtung | 78 | Kennzeichnung |
| 34 | Befestigungsvorrichtung | 80 | Durchgangsloch |
| 36 | Trägervorrichtung | 82 | Positionierelement |
| 38 | Positioniervorrichtung | 84 | Stützfläche |
| 40 | Positioniervorrichtung | 86 | zylinderförmiger Abschnitt |
| 42 | Drehriegel | 88 | elastisches Element |
| 44 | Sperrelement | 90 | Stabkörper |
| 46 | Vorspannelement | | |
| 48 | Vorspannelement | A | Drehachse |
| 50 | Führungshülse | b1 | Breite |
| 52 | Führungselement | b2 | Breite |

## Patentansprüche

1. Befestigungsvorrichtung (32) für ein Formatteil (10) zum Führen von Behältern in einer Behälterbehandlungsanlage, aufweisend:
einen Drehriegel (42) zum Einspannen des Formatteils (10), der zwischen einer ersten Riegelstellung, vorzugsweise Entriegelungsstellung, und einer zweiten Riegelstellung, vorzugsweise Verriegelungsstellung, um eine Drehachse (A) drehbar ist; und
ein Sperrelement (44), das in einer Sperrstellung den Drehriegel (42) in der ersten Riegelstellung blockiert, vorzugsweise mittels Eingreifen in den Drehriegel (42), und in einer Freigabestellung eine Drehung des Drehriegels (42) freigibt,
**dadurch gekennzeichnet, dass** das Sperrelement (44) koaxial zu der Drehachse (A) zwischen der Sperrstellung und der Freigabestellung verschiebbar ist.

2. Befestigungsvorrichtung (32) nach Anspruch 1, wobei:
der Drehriegel (42) elastisch zum Drehen zu der zweiten Riegelstellung vorgespannt ist, vorzugsweise mittels einer bevorzugt koaxial zur Drehachse (A) angeordneten Torsionsfeder (46); und/oder
das Sperrelement (44) elastisch zum Verschieben zu der Sperrstellung vorgespannt ist, vorzugsweise mittels einer bevorzugt koaxial zur Drehachse (A) angeordneten Schraubenfeder (48).

3. Befestigungsvorrichtung (32) nach Anspruch 1 oder Anspruch 2, ferner aufweisend:
eine Führungshülse (50), auf der das Sperrelement (44) zwischen der Sperrstellung und der Freigabestellung verschiebbar ist,
wobei vorzugsweise:
die Führungshülse (50) verdrehsicher angeordnet ist; und
eine den Drehriegel (42) zu der zweiten Riegelstellung vorspannende Torsionsfeder (46) an der Führungshülse (50) gehalten ist, vorzugsweise mit einem Ende (68) der Torsionsfeder (46) in einem Loch (70) einer ringförmigen Außenwand der Führungshülse (50).

4. Befestigungsvorrichtung (32) nach einem der vorherigen Ansprüche, wobei:
der Drehriegel (42) unterseitig einen Kragenabschnitt (72), der vorzugsweise koaxial zur Drehachse (A) verläuft und über den der Drehriegel (42) drehbar geführt und/oder zentriert ist, aufweist; und
das Sperrelement (44) in der Sperrstellung in eine Ausnehmung in dem Kragenabschnitt (72) eingreift.

5. Befestigungsvorrichtung (32) nach einem der vorherigen Ansprüche, ferner aufweisend:
ein Führungselement (52),
wobei:
der Drehriegel (42) an dem Führungselement (52) zum Drehen geführt und/oder zentriert ist, vorzugsweise an einem oberen Abschnitt des Führungselements (52); und/oder
das Sperrelement (44) an dem Führungselement (52) zum Verschieben geführt ist, vorzugsweise in mindestens einer Ausnehmung einer Außenwand des Führungselements (52), und optional verdrehsicher bezüglich der Drehachse (A) gehalten ist; und/oder
das Führungselement (52) eine Kontaktfläche aufweist, wobei das Formatteil zwischen der Kontaktfläche und dem Drehriegel (42) einspannbar ist.

6. Befestigungsvorrichtung (32) nach einem der vorherigen Ansprüche, wobei:
das Sperrelement (44) als ein Stab, vorzugsweise Flachstab, ausgeführt ist; und/oder
das Sperrelement (44) eine Durchgangsöffnung, die koaxial zur Drehachse (A) angeordnet ist, aufweist; und/oder
das Sperrelement (44) quer zu der Drehachse (A) ausgerichtet ist.

7. Formatteil (10) zum Führen von Behältern in einer Behälterbehandlungsanlage, aufweisend:
einen Hauptkörper (12) zum Führen der Behälter; und
einen Drehbetätiger (14), vorzugsweise Drehknopf,
**dadurch gekennzeichnet, dass** der Drehbetätiger (14) eine Aufnahme (26) zum Mitnehmen eines Drehriegels (42) einer Befestigungsvorrichtung (32) nach einem der Ansprüche 1 bis 6 zum Einspannen des Formatteils (10) aufweist.

8. Formatteil (10) nach Anspruch 7, wobei:
der Drehbetätiger (14) im Wesentlichen haubenförmig und/oder als Hohlkörper ausgeführt ist; und/oder
der Hauptkörper (12) mindestens ein gebogenes Langloch (22) aufweist, in dem der Drehbetätiger (14) beim Drehen geführt ist; und/oder
die Aufnahme (26) oberhalb von einem Durchgangsloch (28) des Hauptkörpers (12) zum Durchführen des Drehriegels (42) angeordnet ist.

9. Formatteil (10) nach Anspruch 7 oder Anspruch 8, ferner aufweisend:
mindestens einen Positionierabschnitt (21) zum Schwenken und/oder Positionieren des Formatteils (10) an mindestens einer Positioniervorrichtung (38, 40), der als eine abgerundete Vertiefung ausgebildet und vorzugsweise endseitig oder stirnseitig am Hauptkörper (12) angeordnet ist.

10. Behälterbehandlungsmaschine oder Behältertransportmaschine, aufweisend:
ein Formatteil (10) zum Führen von Behältern,
eine Befestigungsvorrichtung (32) nach einem der Ansprüche 1 bis 6, wobei:
das Formatteil (10) das Sperrelement (44) kontaktiert; und/oder
das Sperrelement (44) so angeordnet sein, dass es beim Aufsetzen des Formatteils (10) auf die Befestigungsvorrichtung (32) von dem Formatteil (10) zu der Freigabestellung verschiebbar ist.

11. Maschine nach Anspruch 10, wobei:
das Formatteil (10) nach einem der Ansprüche 7 bis 9 ausgebildet ist; und
der Drehriegel (42) in der Aufnahme des Drehbetätigers (14) angeordnet und zum Drehen mit dem Drehbetätiger (14) verbunden ist, vorzugsweise formschlüssig und/oder kraftschlüssig.

12. Maschine nach Anspruch 10 oder Anspruch 11, ferner aufweisend:
mindestens eine Positioniervorrichtung (38, 40), an der das Formatteil (10) geneigt ansetzbar und zum Schwenken auf die Befestigungsvorrichtung (32) führbar ist.

13. Maschine nach einem der Ansprüche 10 bis 12, ferner aufweisend:
ein weiteres Formatteil (10) zum Führen von Behältern, vorzugsweise nach einem der Ansprüche 7 bis 9; und
eine weitere Befestigungsvorrichtung (34) nach einem der Ansprüche 1 bis 6, für das weitere Formatteil (10),
wobei der Drehriegel (42) der Befestigungsvorrichtung (32) und der Drehriegel (42') der weiteren Befestigungsvorrichtung (34) visuell voneinander unterscheidbar gekennzeichnet sind; und/oder
wobei der Drehriegel (42) der Befestigungsvorrichtung (32) und der Drehriegel (42') der weiteren Befestigungsvorrichtung (34) unterschiedlich dimensioniert, vorzugsweise breit, sind.

14. Verfahren zur Montage eines Formatteils (10) zum Führen von Behältern in einer Behältertransportmaschine oder Behälterbehandlungsmaschine, wobei das Verfahren aufweist:
Ansetzen des Formatteils (10) an mindestens einer Positioniervorrichtung (38, 40);
Schwenken des an der Positioniervorrichtung (38, 40) angesetzten Formatteils (10) auf eine Befestigungsvorrichtung (32), vorzugsweise von oben; und
Befestigen des auf die Befestigungsvorrichtung (32) geschwenkten Formatteils (10) an der Befestigungsvorrichtung (32), vorzugweise mittels einer selbststätigen Verriegelung zwischen dem Formatteil (10) und der Befestigungsvorrichtung (32),
**dadurch gekennzeichnet, dass** die Befestigungsvorrichtung (32) nach einem der Ansprüche 1 bis 6 ausgebildet ist.

15. Verfahren nach Anspruch 14, wobei:
das Formatteil (10) nach einem der Ansprüche 7 bis 9 ausgebildet ist, der Drehriegel (42) in der Aufnahme des Drehbetätigers (14) angeordnet ist und der Drehriegel (42) mittels Drehung des Drehbetätigers (14) zum Entnehmen des Formatteils (10) entriegelbar ist.

## Claims

1. A fastening apparatus (32) for a format part (10) for guiding containers in a container treatment plant, comprising:
a rotary lock (42) which is intended for clamping the format part (10) and is rotatable about an axis of rotation (A) between a first lock position, preferably an unlocking position, and a second lock position, preferably a locking position; and
a blocking element (44) which, in a blocking position, blocks the rotary lock (42) in the first lock position, preferably by engaging in the rotary lock (42), and, in an unblocking position, unblocks rotation of the rotary lock (42),
**characterized in that** the blocking element (44) is movable coaxially to the axis of rotation (A) between the blocking position and the unblocking position.

2. The fastening apparatus (32) according to claim 1, wherein:
the rotary lock (42) is resiliently biased to rotate into the second lock position, preferably by a torsion spring (46) preferably arranged coaxially to the axis of rotation (A); and/or
the blocking element (44) is resiliently biased to move into the blocking position, preferably by a helical spring (48) preferably arranged coaxially to the axis of rotation (A).

3. The fastening apparatus (32) according to claim 1 or claim 2, further comprising:
a guide sleeve (50) on which the blocking element (44) can be moved between the blocking position and the unblocking position,
wherein preferably:
the guide sleeve (50) is arranged such that it is secured against rotation; and
a torsion spring (46) which biases the rotary lock (42) into the second lock position is held on the guide sleeve (50), preferably with one end (68) of the torsion spring (46) in a hole (70) of an annular outer wall of the guide sleeve (50).

4. The fastening apparatus (32) according to any of the preceding claims, wherein:
the rotary lock (42) comprises, on its bottom, a collar section (72) which preferably extends coaxially to the axis of rotation (A) and by which the rotary lock (42) is rotatably guided and/or centered; and
the blocking element (44) engages in a recess in the collar section (72) in the blocking position.

5. The fastening apparatus (32) according to any of the preceding claims, further comprising: a guide element (52),
wherein:
the rotary lock (42) is guided and/or centered for rotation on the guide element (52), preferably on an upper section of the guide element (52); and/or
the blocking element (44) is guided for movement on the guide element (52), preferably in at least one recess of an outer wall of the guide element (52), and is optionally held such that it is secured against rotation with respect to the axis of rotation (A); and/or
the guide element (52) comprises a contact surface, wherein the format part can be clamped between the contact surface and the rotary lock (42).

6. The fastening apparatus (32) according to any of the preceding claims, wherein:
the blocking element (44) is configured as a bar, preferably a flat bar; and/or
the blocking element (44) has a through-opening which is arranged coaxially to the axis of rotation (A); and/or
the blocking element (44) is oriented transversely to the axis of rotation (A).

7. A format part (10) for guiding containers in a container treatment plant, comprising:
a main body (12) for guiding the containers; and
a rotary actuator (14), preferably a rotary knob,
**characterized in that** the rotary actuator (14) comprises a receiving section (26) for carrying a rotary lock (42) of a fastening apparatus (32) according to any of claims 1 to 6 in order to clamp the format part (10).

8. The format part (10) according to claim 7, wherein:
the rotary actuator (14) is substantially configured like a cap and/or as a hollow body; and/or
the main body (12) comprises at least one curved elongate hole (22) in which the rotary actuator (14) is guided during rotation; and/or
the receiving section (26) is arranged above a through-hole (28) of the main body (12) for the rotary lock (42) to pass through.

9. The format part (10) according to claim 7 or claim 8, further comprising:
at least one positioning section (21) for pivoting and/or positioning the format part (10) on at least one positioning apparatus (38, 40), which is configured as a rounded cavity and is preferably arranged on the end or front of the main body (12).

10. A container treatment machine or container transport machine, comprising:
a format part (10) for guiding containers,
a fastening apparatus (32) according to any of claims 1 to 6, wherein:
the format part (10) contacts the blocking element (44); and/or
the blocking element (44) is arranged such that, when the format part (10) is put onto the fastening apparatus (32), it can be moved by the format part (10) into the unblocking position.

11. The machine according to claim 10, wherein:
the format part (10) is configured according to any of claims 7 to 9; and
the rotary lock (42) is arranged in the receiving section of the rotary actuator (14) and is connected, preferably interlockingly and/or frictionally, to the rotary actuator (14) for rotation.

12. The machine according to claim 10 or claim 11, further comprising:
at least one positioning apparatus (38, 40) on which the format part (10) can be placed at an angle and guided to pivot onto the fastening apparatus (32).

13. The machine according to any of claims 10 to 12, further comprising:
a further format part (10) for guiding containers, preferably according to any of claims 7 to 9; and
a further fastening apparatus (34) according to any of claims 1 to 6, for the further format part (10),
wherein the rotary lock (42) of the fastening apparatus (32) and the rotary lock (42') of the further fastening apparatus (34) are visually distinguishable from one another; and/or
wherein the rotary lock (42) of the fastening apparatus (32) and the rotary lock (42') of the further fastening apparatus (34) are dimensioned differently, preferably in terms of width.

14. A method for mounting a format part (10) for guiding containers in a container transport machine or container treatment machine, wherein the method comprises:
placing the format part (10) on at least one positioning apparatus (38, 40);
pivoting the format part (10) placed on the positioning apparatus (38, 40) onto a fastening apparatus (32), preferably from above; and
fastening the format part (10) pivoted onto the fastening apparatus (32) to the fastening apparatus (32), preferably by a self-locking mechanism between the format part (10) and the fastening apparatus (32),
**characterized in that** the fastening apparatus (32) is configured according to any of claims 1 to 6.

15. The method according to claim 14, wherein:
the format part (10) is configured according to any of claims 7 to 9, the rotary lock (42) is arranged in the receiving section of the rotary actuator (14), and the rotary lock (42) can be unlocked by rotating the rotary actuator (14) in order to remove the format part (10).

## Revendications

1. Dispositif de fixation (32) pour une pièce de format (10) pour le guidage de récipients dans une installation de traitement de récipients, présentant :
un verrou rotatif (42) pour le serrage de la pièce de format (10), lequel peut tourner autour d'un axe de rotation (A) entre une première position de verrou, de préférence une position de déverrouillage, et une seconde position de verrou, de préférence une position de verrouillage ; et
un élément de blocage (44) qui, dans une position de blocage, bloque le verrou rotatif (42) dans la première position de verrou, de préférence au moyen d'une mise en prise dans le verrou rotatif (42), et qui, dans une position de libération, libère une rotation du verrou rotatif (42), **caractérisé en ce que** l'élément de blocage (44) peut être coulissé coaxialement à l'axe de rotation (A) entre la position de blocage et la position de libération.

2. Dispositif de fixation (32) selon la revendication 1, dans lequel :
le verrou rotatif (42) est précontraint élastiquement pour la rotation vers la seconde position de verrou, de préférence au moyen d'un ressort de torsion (46) disposé de préférence coaxialement à l'axe de rotation (A) ; et/ou
l'élément de blocage (44) est précontraint élastiquement pour le coulissement vers la position de blocage, de préférence au moyen d'un ressort hélicoïdal (48) disposé de préférence coaxialement à l'axe de rotation (A).

3. Dispositif de fixation (32) selon la revendication 1 ou la revendication 2, présentant en outre :
une douille de guidage (50) sur laquelle l'élément de blocage (44) peut être coulissé entre la position de blocage et la position de libération,
dans lequel de préférence :
la douille de guidage (50) est disposée de manière non rotative ; et
un ressort de torsion (46) qui précontraint le verrou rotatif (42) vers la seconde position de verrou est maintenu sur la douille de guidage (50), de préférence avec une extrémité (68) du ressort de torsion (46) dans un trou (70) d'une paroi extérieure annulaire de la douille de guidage (50).

4. Dispositif de fixation (32) selon l'une des revendications précédentes, dans lequel :
le verrou rotatif (42) présente côté inférieur une section formant collerette (72) qui s'étend de préférence coaxialement à l'axe de rotation (A) et par l'intermédiaire de laquelle le verrou rotatif (42) est centré et/ou guidé de manière à pouvoir tourner ; et
l'élément de blocage (44) vient en prise dans un évidement dans la section formant collerette (72) dans la position de blocage.

5. Dispositif de fixation (32) selon l'une des revendications précédentes, présentant en outre : un élément de guidage (52),
dans lequel :
le verrou rotatif (42) est centré et/ou guidé sur l'élément de guidage (52) pour la rotation, de préférence sur une section supérieure de l'élément de guidage (52) ; et/ou
l'élément de blocage (44) est guidé sur l'élément de guidage (52) pour le coulissement, de préférence dans au moins un évidement d'une paroi extérieure de l'élément de guidage (52), et est éventuellement maintenu de manière non rotative par rapport à l'axe de rotation (A) ; et/ou
l'élément de guidage (52) présente une surface de contact, dans lequel la pièce de format peut être serrée entre la surface de contact et le verrou rotatif (42).

6. Dispositif de fixation (32) selon l'une des revendications précédentes, dans lequel :
l'élément de blocage (44) est mis en œuvre sous forme de barre, de préférence de barre plate ; et/ou
l'élément de blocage (44) présente une ouverture de passage qui est disposée coaxialement à l'axe de rotation (A) ; et/ou
l'élément de blocage (44) est orienté transversalement à l'axe de rotation (A).

7. Pièce de format (10) pour le guidage de récipients dans une installation de traitement de récipients, présentant :
un corps principal (12) pour le guidage de récipients ; et
un actionneur rotatif (14), de préférence un bouton rotatif,
**caractérisée en ce que** l'actionneur rotatif (14) présente un logement (26) destiné à accompagner un verrou rotatif (42) d'un dispositif de fixation (32) selon l'une des revendications 1 à 6 pour le serrage de la pièce de format (10).

8. Pièce de format (10) selon la revendication 7, dans laquelle :
l'actionneur rotatif (14) est mis en oeuvre sensiblement en forme de capot et/ou sous forme de corps creux ; et/ou
le corps principal (12) présente au moins un trou oblong (22) courbé dans lequel l'actionneur rotatif (14) est guidé lors de la rotation ; et/ou
le logement (26) est disposé au-dessus d'un trou de passage (28) du corps principal (12) pour le passage du verrou rotatif (42).

9. Pièce de format (10) selon la revendication 7 ou la revendication 8, présentant en outre :
au moins une section de positionnement (21) pour le pivotement et/ou le positionnement de la pièce de format (10) sur au moins un dispositif de positionnement (38, 40), laquelle section de positionnement est réalisée sous forme de renfoncement arrondi et est disposée de préférence côté extrémité ou côté frontal sur le corps principal (12).

10. Machine de traitement de récipients ou machine de transport de récipients, présentant :
une pièce de format (10) pour le guidage de récipients,
un dispositif de fixation (32) selon l'une des revendications 1 à 6, dans laquelle :
la pièce de format (10) entre en contact avec l'élément de blocage (44) ; et/ou
l'élément de blocage (44) est disposé de sorte que, lors de la mise en place de la pièce de format (10) sur le dispositif de fixation (32), il peut être coulissé de la pièce de format (10) vers la position de libération.

11. Machine selon la revendication 10, dans laquelle :
la pièce de format (10) est réalisée selon l'une des revendications 7 à 9 ; et
le verrou rotatif (42) est disposé dans le logement de l'actionneur rotatif (14) et est relié, de préférence par complémentarité de forme et/ou par adhérence, à l'actionneur rotatif (14) pour la rotation.

12. Machine selon la revendication 10 ou la revendication 11, présentant en outre :
au moins un dispositif de positionnement (38, 40) sur lequel la pièce de format (10) peut être placée de manière inclinée et peut être guidée pour le pivotement sur le dispositif de fixation (32).

13. Machine selon l'une des revendications 10 à 12, présentant en outre :
une autre pièce de format (10) pour le guidage de récipients, de préférence selon l'une des revendications 7 à 9 ; et
un autre dispositif de fixation (34) selon l'une des revendications 1 à 6 pour l'autre pièce de format (10),
dans laquelle le verrou rotatif (42) du dispositif de fixation (32) et le verrou rotatif (42') de l'autre dispositif de fixation (34) sont caractérisés de manière à pouvoir être distingués visuellement l'un de l'autre ; et/ou
dans laquelle le verrou rotatif (42) du dispositif de fixation (32) et le verrou rotatif (42') de l'autre dispositif de fixation (34) sont de dimensions différentes, de préférence en largeur.

14. Procédé pour le montage d'une pièce de format (10) pour le guidage de récipients dans une machine de transport de récipients ou une machine de traitement de récipients, dans lequel le procédé présente :
la mise en place de la pièce de format (10) sur au moins un dispositif de positionnement (38, 40) ;
le pivotement de la pièce de format (10) placée sur le dispositif de positionnement (38, 40) sur un dispositif de fixation (32), de préférence par le haut ; et
la fixation de la pièce de format (10) pivotée sur le dispositif de fixation (32) sur le dispositif de fixation (32), de préférence au moyen d'un verrouillage autonome entre la pièce de format (10) et le dispositif de fixation (32),
**caractérisé en ce que** le dispositif de fixation (32) est réalisé selon l'une des revendications 1 à 6.

15. Procédé selon la revendication 14, dans lequel :
la pièce de format (10) est réalisée selon l'une des revendications 7 à 9, le verrou rotatif (42) est disposé dans le logement de l'actionneur rotatif (14) et le verrou rotatif (42) peut être déverrouillé au moyen d'une rotation de l'actionneur rotatif (14) pour le retrait de la pièce de format (10).
